# EUROPEAN PATENT APPLICATION

(11) **EP 4 216 319 A1**
(43) Date of publication of application: **26.07.2023**
(21) Application number: 21956964.7
(22) Date of filing: 30.11.2021
(51) Int. Cl.: H01M 4/66, H01M 4/80

(54) **CURRENT COLLECTOR AND PREPARATION METHOD THEREFOR, SECONDARY BATTERY, BATTERY MODULE, BATTERY PACK, AND ELECTRIC DEVICE**

(71) Applicant: Contemporary Amperex Technology Co., Limited, Ningde, Fujian 352100 (CN)
(72) Inventor: WANG, Manman, Ningde, Fujian 352100 (CN); GE, Xiaoming, Ningde, Fujian 352100 (CN); OUYANG, Chuying, Ningde, Fujian 352100 (CN)
(74) Representative: Holt, Lucy Rose
(86) International application number: PCT/CN2021/134457
(87) International publication number: WO 2023/097457

(57) **Abstract**

The present application provides a current collector and a preparation method therefor, a secondary battery, a battery module, a battery pack and a power consuming device. The current collector comprises a strength enhancement layer (1) and a current collecting layer (2). The current collecting layer (2) comprises a first foam metal layer (21) that is stacked and bonded with the strength enhancement layer (1) and a second foam metal layer (22) that is provided on the side of the first foam metal layer (21) away from the strength enhancement layer (1) and is stacked with the first foam metal layer (21), the second foam metal layer (22) having a porosity greater than that of the first foam metal layer (21). The first foam metal layer (21) with small porosity and high mechanical strength is provided at a position close to the strength enhancement layer, which is conducive to improving the mechanical properties of the current collector on the premise of ensuring the contact area between the current collecting layer and an electrolyte.

## Description

### Technical Field

The present application relates to the technical field of batteries, and in particular to a current collector and a preparation method therefor, a secondary battery, a battery module, a battery pack, and a power consuming device.

### Background Art

With the growing demand for energy and increasing awareness of environmental protection, new-types of energy sources are getting more and more attention.

Secondary batteries are a common new-type energy source, and a current collector is an important constituent part of the secondary battery. The current collector not only functions to carry an active material, but also collects and guides electrons generated by an electrochemical reaction to an external circuit, so as to achieve a process of converting chemical energy into electrical energy. At present, a current collector made of a foam metal material has poor mechanical properties, so there is an expectation in the industry for a foam metal current collector that can solve the problem of mechanical properties.

### Summary of the Invention

The present application provides a current collector and a preparation method therefor, a secondary battery, a battery module, a battery pack, and a power consuming device, so as to solve the problem of mechanical properties, such as poor mechanical strength, of current collectors made of a foam metal material in the related art.

According to an aspect of the present application, a current collector is provided. The current collector comprises a strength enhancement layer and a current collecting layer. The current collecting layer comprises a first foam metal layer that is stacked and bonded with the strength enhancement layer and a second foam metal layer that is provided on the side of the first foam metal layer away from the strength enhancement layer and is stacked with the first foam metal layer, the second foam metal layer having a porosity greater than that of the first foam metal layer. The first foam metal layer with small porosity and high mechanical strength is provided at a position close to the strength enhancement layer, which is conducive to improving the mechanical properties of the current collector on the premise of ensuring the contact area between the current collecting layer and an electrolyte.

In some embodiments, the strength enhancement layer is a sheet-like metal layer, which is conducive to solving the problem that a tab is likely to tear when the tab is formed by punching at an end of the current collector or when the tab is welded to a conductive component; or the strength enhancement layer is of a mesh structure, and the strength enhancement layer of the mesh structure is conducive to ensuring the bending resistance of the current collector while enhancing the strength of the current collector, so that the current collector can be easily wound into a roll.

In some embodiments, the sheet-like metal layer is provided with a through hole to allow the battery fluid on either side of the strength enhancement layer to flow to the opposite side.

In some embodiments, the current collecting layers are respectively provided on two sides of the strength enhancement layer, and the strength enhancement layer and the two current collecting layers are provided side by side in a thickness direction of the current collector, the strength enhancement layer being located between the two current collecting layers, so that the current collector satisfies the characteristics of a symmetrical electrode structure.

In some embodiments, the first foam metal layer has a porosity of 30% to 60%; and/or the second foam metal layer has a porosity of 80% to 95%. The second foam metal layer 22 located on an outer side has a larger porosity, which is conducive to increasing the contact area between the second foam metal layer and the electrolyte and ensuring the charge/discharge performance of the battery. The first foam metal layer located on an inner side has smaller porosity and higher mechanical strength, which is conducive to solving the problem in the prior art that a tab is likely to tear when the tab is formed by cutting at one end of a current collector or when the tab is welded to a conductive component.

In some embodiments, the strength enhancement layer has a thickness of 1-12 µm; and/or the first foam metal layer has a thickness of 20-100 µm; and/or the second foam metal layer has a thickness of 20-200 µm.

In some embodiments, the current collecting layer is made of one of copper, nickel, titanium, aluminum, silver, a nickel alloy, a titanium alloy, a silver alloy, and an aluminum alloy.

According to another aspect of the present application, a preparation method for a current collector is further provided. The preparation method comprises a bonding step and a foam forming step. The bonding step comprises stacking a second alloy foil for forming a second foam metal layer, a first alloy foil for forming a first foam metal layer, and a strength enhancement layer in sequence, and bonding the second alloy foil, the first alloy foil and the strength enhancement layer to form an intermediate body. The foam forming step comprises placing the intermediate body in a corrosive solution to remove one or more elements from the first alloy foil and the second alloy foil such that the first alloy foil and the second alloy foil respectively form the first foam metal layer and the second foam metal layer. In some examples, the second foam metal layer treated with the corrosive solution has a porosity greater than that of the first foam metal layer.

In some embodiments, the corrosive solution includes at least one of a dilute hydrochloric acid solution, an ammonium sulfate solution, an electrolytic solution obtained by mixing H₂SO₄ and MnSO₄, an acetic acid solution, a phosphoric acid solution, and a sulfuric acid solution.

In some embodiments, the first alloy foil, the second alloy foil and the strength enhancement layer are bonded by rolling.

According to another aspect of the present application, a secondary battery is further provided, comprising the current collector described above or a current collector prepared by means of the preparation method described above.

According to another aspect of the present application, a battery module is further provided. The battery module comprises the secondary battery described above.

According to another aspect of the present application, a battery pack is further provided. The battery module comprises the battery module described above.

According to another aspect of the present application, a power consuming device is further provided. The power consuming device comprises at least one of the secondary battery described above, the battery module described above, or the battery pack described above.

### Brief Description of the Drawings

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without creative efforts.
Fig. 1 shows a schematic structural diagram of a vehicle disclosed in some embodiments of the present application;
Fig. 2 shows a schematic exploded structural diagram of a battery group disclosed in some embodiments of the present application;
Fig. 3 shows a schematic partial structural diagram of a battery module disclosed in some embodiments of the present application;
Fig. 4 shows a schematic structural diagram of a current collector disclosed in some embodiments of the present application;
Fig. 5 shows a schematic structural diagram of a current collector disclosed in other embodiments of the present application; and
Fig. 6 shows a schematic structural diagram of a current collector disclosed in other embodiments of the present application.

List of reference numerals: 1000. vehicle; 100. battery pack; 200. controller; 300. motor; 110. case; 111. first portion; 112. second portion; 120. battery unit; 121. end cap; 121a. electrode terminal; 122. housing; 123. cell assembly; 123a. tab; 1. strength enhancement layer; 2. current collecting layer; 21. foam metal portion; and 22. solid metal portion.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example, but shall not be used to limit the scope of the present application. That is, the present application is not limited to the described embodiments.

In the description of the present application, it should be noted that "a plurality of" means at least two, unless otherwise specified. the orientation or a position relationship indicated by the terms "upper", "lower", "left", "right", "inner", "outer", etc. is for convenience of describing the present application and simplifying the description only, rather than indicating or implying that the device or element referred to must have a particular orientation or be constructed and operated in a particular orientation, and therefore should not be construed as a limitation on the present application. In addition, the terms "first", "second", "third", etc. are used for descriptive purposes only, and shall not be construed as indicating or implying relative importance. The term "perpendicular" does not mean being perpendicular in the strict sense, but within an allowable range of errors. The term "parallel" does not mean being parallel in the strict sense, but within an allowable range of errors.

The orientation terms in the following description all indicate directions shown in the drawings, but do not limit the specific structure in the present application. In the description of the present application, it should also be noted that the terms "mounting", "connecting" and "connection" should be interpreted in a broad sense, unless explicitly specified and defined otherwise, which, for example, may be a fixed connection, a detachable connection or an integral connection, or may be a direct connection, or an indirect connection through an intermediate medium. For those of ordinary skill in the art, the specific meaning of the terms mentioned above in the present application can be construed according to specific circumstances.

Further, "ranges" disclosed in the present application are defined in the form of lower and upper limits, where a given range is defined by the selection of a lower limit and an upper limit, and the selected lower limit and the upper limit define the boundaries of a particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be construed that the ranges of 60-110 and 80-120 are also contemplated. In addition, if minimum range values 1 and 2 are listed, and maximum range values 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, and so on.

All the embodiments and optional embodiments of the present application can be combined with one another to form new technical solutions, unless otherwise stated.

All technical features and optional technical features of the present application can be combined with one another to form a new technical solution, unless otherwise stated.

All the steps of the present application can be performed sequentially or randomly, preferably sequentially, unless stated otherwise. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

The terms "comprising" and "including" mentioned in the present application are open-ended or closed-ended, unless otherwise stated. For example, the terms "comprising" and "including" may mean that other components not listed may also be comprised or included, or only the listed components may be comprised or included.

In the present application, the term "or" is inclusive, unless otherwise specified. For example, the phrase "A or B" means "A, B, or both A and B". More specifically, the condition "A or B" is satisfied by any one of the following: A is true (or present), and B is false (or not present); A is false (or not present), and B is true (or present); or both A and B are true (or present).

At present, from the perspective of the development of the market situation, the traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of traction batteries, the market demand for the traction batteries is also expanding.

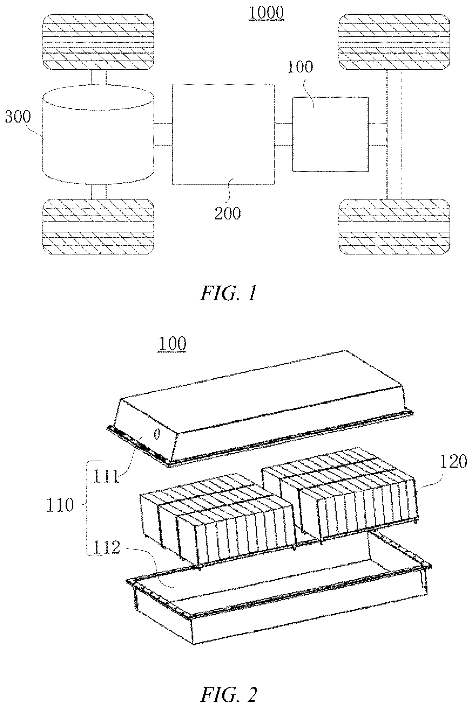

Fig. 1 shows a schematic structural diagram of a power consuming device using a battery as a power source. As shown in Fig. 1, the power consuming device of this embodiment comprises a vehicle 1000. The vehicle 1000 may be a battery electric vehicle, a hybrid electric vehicle, an extended-range electric vehicle, etc. The vehicle 1000 is provided with a battery pack 100 inside, and the battery pack 100 may be provided at the bottom, the front or the rear of the vehicle 1000. The battery pack 100 may be used to supply power to the vehicle 1000. For example, the battery pack 100 may serve as an operation power source of the vehicle 1000. The vehicle 1000 may further comprise a controller 200 and a motor 300. The controller 200 is used for controlling the battery pack 100 to supply power to the motor 300, for example, for meeting the working power demand during startup, navigation and traveling of the vehicle 1000.

In some embodiments of the present application, the battery pack 100 may not only serve as an operation power source for the vehicle 1000, but also serve as a driving power source for the vehicle 1000, instead of or partially instead of fuel or natural gas, to provide driving power for the vehicle 1000.

Referring to Fig. 2, Fig. 2 is an exploded view of the battery pack 100 provided in some embodiments of the present application. The battery pack 100 comprises a case 110 and a battery module provided in the case 110. The battery module comprises a plurality of battery units 120, the battery units 120 being accommodated in the case 110. The case 110 is used to provide an accommodating space for the battery units 120, and the case 110 may be of various structures. In some embodiments, the case 110 may comprise a first portion 111 and a second portion 112. The first portion 111 and the second portion 112 are fitted to each other in a covered manner, and the first portion 111 and the second portion 112 together define an accommodating space for accommodating the battery units 120. The second portion 112 may be of a hollow structure with one end open, the first portion 111 may be of a plate-like structure, and the first portion 111 is fitted to an open side of the second portion 112 in a covered manner such that the first portion 111 and the second portion 112 together define the accommodating space; and the first portion 111 and the second portion 112 may also be of a hollow structure with one side open, and an open side of the first portion 111 is fitted to the open side of the second portion 112 in a covered manner. Of course, the case 110 formed by the first portion 111 and the second portion 112 may be in various shapes such as a cylinder and a cuboid.

In the battery pack 100, a plurality of battery units 120 may be provided. The plurality of battery units 120 may be connected in series, in parallel, or in series and parallel. The parallel-series connection means that the plurality of battery units 120 are connected both in series and in parallel. The plurality of battery units 120 may be directly connected in series or in parallel or in series and parallel, and then a whole body composed of the plurality of battery units 120 is received in the case 110; and of course, the battery pack 100 may also be in the form that a plurality of battery units 120 are firstly connected in series or in parallel or in series and parallel to form a battery module, and then a plurality of battery modules are connected in series or in parallel or in series and parallel to form a whole body and are received in the case 110. The battery pack 100 may further comprise other structures. For example, the battery pack 100 may further comprise a busbar component for achieving electrical connection of the plurality of battery units 120.

Each battery unit 120 may be a secondary battery or a primary battery, and may also be a lithium-sulfur battery, a sodium-ion battery, or a magnesium-ion battery, but is not limited thereto. The battery unit 120 may be cylindrical, flat, cuboid, or other shapes.

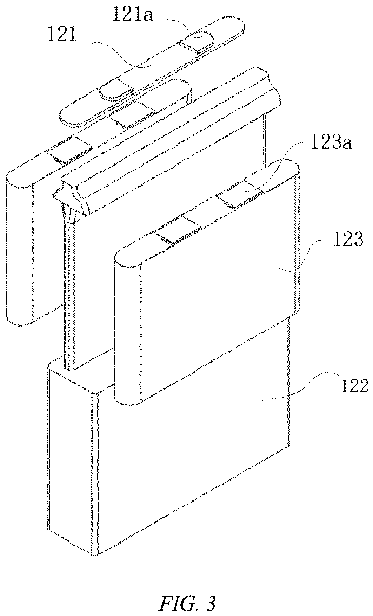

Referring to Fig. 3, Fig. 3 is a schematic exploded structural diagram of a battery unit 120 provided in some embodiments of the present application. The battery unit 120 refers to the smallest unit of the battery pack 100. As shown in Fig. 3, the battery unit 120 comprises an end cap 121, a housing 122, a cell assembly 123 and other functional components.

The end cap 121 refers to a component that covers an opening of the housing 122 to isolate an internal environment of the battery unit 120 from an external environment. Without limitation, the end cap 121 may have a shape adapted to that of the housing 122 to fit with the housing 122. Optionally, the end cap 121 may be made of a material with certain hardness and strength, such as an aluminum alloy, and thus the end cap 121 is not easily deformed when being pressed or collided, so that the battery unit 120 can have higher structural strength, and the safety performance can also be improved. Functional components, such as electrode terminals 121a, may be provided on the end cap 121. The electrode terminals 121a may be used for electrical connection to the cell assembly 123 for outputting or inputting electrical power of the battery unit 120. In some embodiments, a pressure relief mechanism, which is used to release internal pressure when the internal pressure or temperature of the battery unit 120 reaches a threshold, may be further provided on the end cap 121. The end cap 21 may also be made of various materials, such as copper, iron, aluminum, stainless steel, an aluminum alloy and plastic, which is not particularly limited in the embodiments of the present application. In some embodiments, an insulating member may be further provided on an inner side of the end cap 121. The insulating member may be used to isolate electrical connection components within the housing 122 from the end cap 121 so as to reduce the risk of short circuiting. Illustratively, the insulating member may be made of plastic, rubber, etc.

The housing 122 is an assembly that is used to fit with the end cap 121 to form the internal environment of the battery unit 120, where the formed internal environment may be used for accommodating the cell assembly 123, an electrolytic solution and other components. The housing 122 and the end cap 121 may be separate components, and the housing 122 may be provided with an opening, at which the end cap 121 covers the opening to form the internal environment of the battery unit 120. Without limitation, the end cap 121 and the housing 122 may also be integrated. Specifically, the end cap 121 and the housing 122 can firstly form a common connection surface before other components are placed into the housing, and then the end cap 121 covers the housing 122 when the interior of the housing 122 needs to be packaged. The housing 122 may be in various shapes and various sizes, for example, in the shape of a cuboid, a cylinder, a hexagonal prism, etc. Specifically, the shape of the housing 122 may be determined according to the specific shape and size of the cell assembly 123. The housing 122 may be made of various materials, such as copper, iron, aluminum, stainless steel, an aluminum alloy and plastic, which is not particularly limited in the embodiments of the present application.

The cell assembly 123 is a component, where an electrochemical reaction occurs, in the battery unit 100. The housing 122 may comprise one or more cell assemblies 123 therein. The cell assembly 123 is mainly formed by winding or stacking electrode plates, where the electrode plates include a positive electrode plate and a negative electrode plate, and an isolation film is usually provided between the positive electrode plate and the negative electrode plate.

The electrode plate mainly comprises a sheet-like current collector and an active material coated on the current collector. The portions of the positive electrode plate and the negative electrode plate that have the active material constitute a main body portion of the cell assembly, and the portions of the positive electrode plate and the negative electrode plate that have no active material each constitute a tab 123a. The positive electrode tab and the negative electrode tab can be both located at one end of the main body or respectively at two ends of the main body. During the charge/discharge process of the battery pack 100, the positive electrode active substance and the negative active material react with the electrolytic solution, and the tabs 123a are connected to the electrode terminals to form a current loop.

### [Positive electrode plate]

The positive electrode plate comprises a positive current collector and a positive film layer provided on at least one surface of the positive current collector, the positive film layer comprising a positive active material.

As an example, the positive current collector has two surfaces opposite in its own thickness direction, and the positive film layer is provided on either or both of opposite surfaces of the positive current collector.

In some embodiments, the positive current collector may be a metal foil or a composite current collector, and the positive current collector may also be a current collector set forth in the present application. For example, as a metal foil, an aluminum foil can be used. The composite current collector may comprise a polymer base layer and a metal layer formed on at least one surface of the polymer base layer. The composite current collector may be formed by forming a metal material (aluminum, an aluminum alloy, nickel, a nickel alloy, titanium, a titanium alloy, silver, a silver alloy, etc.) on a polymer substrate (e.g., polypropylene (PP), polyethylene terephthalate (PET), polybutylene terephthalate (PBT), polystyrene (PS) and polyethylene (PE)).

In some embodiments, the positive active material may be a positive active material known in the art for batteries. As an example, the positive active material may include at least one of the following materials: lithium-containing phosphates of an olivine structure, lithium transition metal oxides and their respective modified compounds. However, the present application is not limited to these materials, and other conventional materials that can be used as positive active materials for batteries may also be used. These positive active materials may be used alone or in combination of two or more. Herein, examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), lithium nickel cobalt aluminum oxide (e.g., LiNi_{0.85}Co_{0.15}Al_{0.05}O₂), and modified compounds thereof, etc. Examples of lithium-containing phosphates of an olivine structure may include, but are not limited to, at least one of lithium iron phosphate (e.g., LiFePO₄ (also referred to as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive film layer may optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive film layer may optionally comprise a conductive agent. As an example, the conductive agent may include at least one of superconducting carbon, acetylene black, carbon black, Ketjenblack, carbon dots, carbon nanotubes, graphene, and carbon nanofibers.

In some embodiments, the positive electrode plate can be prepared as follows: dispersing the above-described components for preparing the positive electrode plate, such as a positive active material, a conductive agent, a binder and any other components, in a solvent (e.g., N-methylpyrrolidone) to form a positive slurry; and coating a positive current collector with the positive slurry, followed by the procedures such as drying and cold pressing, so as to obtain the positive electrode plate.

### [Negative electrode plate]

The negative electrode plate comprises a negative current collector and a negative film layer provided on at least one surface of the negative current collector, the negative film layer comprising a negative active material.

As an example, the negative current collector has two surfaces opposite in its own thickness direction, and the negative film layer is provided on either or both of opposite surfaces of the negative current collector.

In some embodiments, the negative current collector may be a metal foil or a composite current collector, and the negative current collector may also be a current collector set forth in the present application. For example, as a metal foil, a copper foil can be used. The composite current collector may comprise a polymer base layer and a metal layer formed on at least one surface of the polymer substrate. The composite current collector can be formed by forming a metal material (copper, a copper alloy, nickel, a nickel alloy, titanium, a titanium alloy, silver, a silver alloy, etc.) on a polymer substrate (e.g., polypropylene (PP), polyethylene terephthalate (PET), polybutylene terephthalate (PBT), polystyrene (PS) and polyethylene (PE)).

In some embodiments, the negative active material may be a negative active material known in the art for batteries. As an example, the negative active material may include at least one of the following materials: artificial graphite, natural graphite, soft carbon, hard carbon, silicon-based materials, tin-based materials, lithium titanate, etc. The silicon-based material may be selected from at least one of elemental silicon, a silicon oxide compound, a silicon carbon composite, a silicon nitrogen composite and a silicon alloy. The tin-based material may be selected from at least one of elemental tin, a tin oxide compound and a tin alloy. However, the present application is not limited to these materials, and other conventional materials that can be used as negative active materials for batteries can also be used. These negative active materials may be used alone or in combination of two or more.

In some embodiments, the negative film layer may optionally comprise a binder. The binder may be selected from at least one of butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative film layer may optionally comprise a conductive agent. The conductive agent may be selected from at least one of superconductive carbon, acetylene black, carbon black, Ketjenblack, carbon dots, carbon nanotubes, graphene, and carbon nanofibers.

In some embodiments, the negative film layer may optionally comprise other auxiliary agents, such as a thickener (e.g., sodium carboxymethyl cellulose (CMC-Na)).

In some embodiments, the negative electrode plate can be prepared as follows: dispersing the above-described components for preparing the negative electrode plate, such as a negative active material, a conductive agent, a binder and any other components, in a solvent (e.g., deionized water) to form a negative slurry; and coating a negative current collector with the negative slurry, followed by the procedures such as drying and cold pressing, so as to obtain the negative electrode plate.

### [Electrolyte]

The electrolyte is located between the positive electrode plate and the negative electrode plate and functions for conducting ions. The type of the electrolyte is not specifically limited in the present application, and can be selected according to requirements. For example, the electrolyte may be in a liquid state, a gel state or an all-solid state.

In some embodiments, an electrolytic solution is used as the electrolyte. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Isolation film]

In some embodiments, the secondary battery further comprises an isolation film. The type of the isolation film is not particularly limited in the present application, and any well-known isolation film of a porous structure with good chemical stability and mechanical stability may be selected.

In some embodiments, the isolation film may be made of a material selected from at least one of glass fiber, non-woven fabric, polyethylene, polypropylene and polyvinylidene fluoride. The isolation film may be a single-layer film, and may also be a multi-layer laminated film, which is not limited particularly. When the isolation film is a multi-layer laminated film, the respective layers may be made of the same or different materials, which is not limited particularly.

The inventors of the present application have noted that a current collector made of a foam metal foil has a problem of low mechanical strength, for example, the problem that a tab is likely to tear when the tab is formed by cutting at one end of a current collector or when the tab is welded to a conductive component. In order to ameliorate the above-mentioned problem, a sheet-like metal foil as a strength enhancement layer is stacked on one side of the foam metal foil to ameliorate the problem of low mechanical strength of the current collector. However, since the current collector needs to be wound into a roll, the strength enhancement layer has a limited thickness, and the current collector using the strength enhancement layer still has the problem of low mechanical strength.

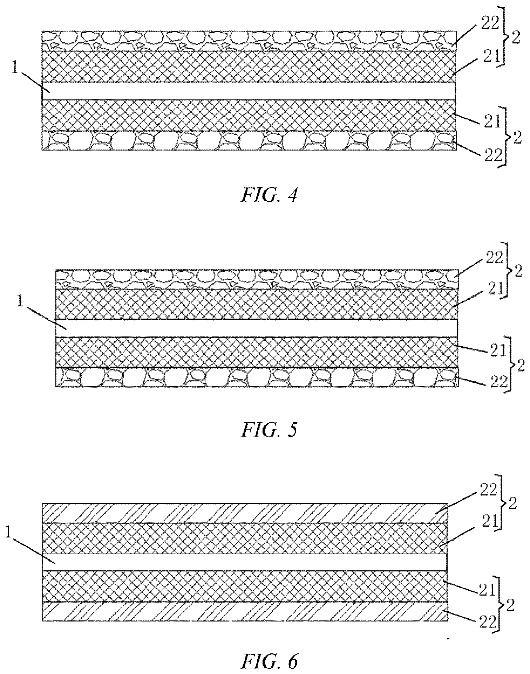

In order to ameliorate the above-mentioned problem, an embodiment of the present application provides a current collector. As shown in Figs. 4 to 6, the current collector comprises a strength enhancement layer 1 and a current collecting layer 2, wherein the current collecting layer 2 comprises a first foam metal layer 21 that is stacked and bonded with the strength enhancement layer 1 and a second foam metal layer 22 that is provided on the side of the first foam metal layer 21 away from the strength enhancement layer 1 and is stacked with the first foam metal layer 21, the second foam metal layer 22 having a porosity greater than that of the first foam metal layer 21.

The porosity refers to the volume of pores inside a porous solid material as a percentage of the total volume of the material. The greater the porosity of the foam metal layer, the greater the contact area between the foam metal layer and the active material of the battery, but accordingly, the poorer the bending resistance and mechanical properties of the corresponding foam metal layer.

The first foam metal layer 21 with small porosity and high mechanical strength is provided at a position close to the strength enhancement layer 1, which is conducive to improving the mechanical properties of the current collector on the premise of ensuring the contact area between the current collecting layer 2 and an electrolyte.

In some embodiments, the strength enhancement layer 1 is a sheet-like metal layer. The sheet-like metal layer in the present application is of a sheet-like structure that is non-porous inside, is a non-foam structure and is made of a metal material. It should be noted that the non-foam structure that is non-porous inside may have a through hole therethrough or surface pits. The battery current collector of this embodiment comprises the strength enhancement layer 1, which improves the poor mechanical properties of the current collector and is conducive to solving the problem that a tab is likely to tear when the tab is formed by punching at an end of the current collector or when the tab is welded to a conductive component.

In other embodiments, the strength enhancement layer 1 is of a mesh structure. The strength enhancement layer 1 of the mesh structure is conducive to ensuring the bending resistance of the current collector while enhancing the strength of the current collector, so that the current collector can be easily wound into a roll.

In some embodiments, the strength enhancement layer 1 is made of copper, and the copper strength enhancement layer 1 not only enhances the mechanical properties of the current collector, but also enables the current collector to have good weldability and electrical conductivity, and is further conductive to ensuring the bending resistance of the current collector to prevent the current collector from breaking during coiling into a roll. The strength enhancement layer 1 may also be made of other materials with good strength, electrical conductivity, and ductility and toughness, such as nickel, aluminum, iron, magnesium, titanium, steel and an alloy.

In some embodiments, the current collecting layers 2 are respectively provided on two sides of the strength enhancement layer 1, and the strength enhancement layer 1 and the two current collecting layers 2 are provided side by side in a thickness direction of the current collector, the strength enhancement layer 1 being located between the two current collecting layers 2, so that the current collector satisfies the characteristics of a symmetrical electrode structure.

In some embodiments, the strength enhancement layer 1 is provided with a through hole to allow the battery fluid on either side of the strength enhancement layer 2 to flow to the opposite side.

In some embodiments, the first foam metal layer 21 has a porosity of 30% to 60%; and the second foam metal layer 22 has a porosity of 80% to 95%. In this embodiment, the second foam metal layer 22 located on an outer side has a larger porosity, which is conducive to increasing the contact area between the second foam metal layer 22 and the electrolyte and ensuring the charge/discharge performance of the battery. The first foam metal layer 21 located on an inner side has smaller porosity and higher mechanical strength, which is conducive to solving the problem in the prior art that a tab is likely to tear when the tab is formed by cutting at one end of a current collector or when the tab is welded to a conductive component.

In some embodiments, the strength enhancement layer 1 has a thickness of 1-12 µm. The greater the thickness of the strength enhancement layer 1, the better the mechanical properties of the current collector, but accordingly, the poorer the bendability of the current collector, so that the current collector is not easy to be wound into a roll. The strength enhancement layer 1 has a thickness of 1 to 12 µm, and can ensure that the current collector has good bendability while ensuring that the current collector has good mechanical properties.

In some embodiments, the first foam metal layer 21 has a thickness of 20-100 µm, and the first foam metal layer 21 has high mechanical strength and low porosity. The thickness of the first foam metal layer 21 is selected to be in the range of 20-100 µm, which effectively ensures the mechanical properties of the current collector on the premise that the current collector can ensure the good charge/discharge performance of the battery.

In some embodiments, the second foam metal layer 22 has a thickness of 20-200 µm. If the second foam metal layer 22 has excessively small thickness, the second foam metal layer 22 has less pores accordingly, and the contact surface between the second foam metal layer 22 and the active material in the battery is also smaller; and if the second foam metal layer 22 has excessively large thickness, the bending resistance of the second foam metal layer 22 becomes poor, and the current collector is prone to cracking during winding into a roll. The second foam metal layer 22 has the thickness of 20 to 200 µm, which ensures sufficient contact between the second foam metal layer 22 and the active material of the battery and can also ensure that the current collector has good bending resistance.

The current collecting layer 2 is made of one of copper, nickel, titanium, aluminum, silver, a nickel alloy, a titanium alloy, a silver alloy, and an aluminum alloy. The nickel alloy may be a nickel-manganese alloy; the titanium alloy may be one of a titanium scandium alloy, a titanium copper alloy and a platinum titanium copper alloy; the silver alloy may be one of a silver-copper alloy, a silver-magnesium alloy, a silver-nickel alloy, a silver-tungsten alloy and a silver-iron alloy; and the aluminum alloy may be one of an aluminum-magnesium alloy, an aluminum-zinc alloy and an aluminum-silicon alloy.

In some embodiments, a preparation method for a current collector comprises laying a first material layer for forming the strength enhancement layer 1, a second material layer for forming the first foam metal layer 21, and a third material layer for forming the second foam metal layer 22 in sequence, and then pressing the first material layer, the second material layer and the third material layer. The first material layer is made of metal powder, the second material layer and the third material layer are made of a mixture of metal powder and a pore forming agent, wherein the contents of the metal powders in the second material layer and the third material layer are respectively corresponding to the porosities of the first foam metal layer 21 and the second foam metal layer 22, and the pore forming agent may be bead-like NaCl balls. A sintering step comprises heating the pressed materials, during which the pore forming agent is vaporized such that the second material layer and the third material layer form a foam metal.

In other embodiments, the preparation method for a current collector comprises a bonding step and a foam forming step.

The bonding step comprises stacking a second alloy foil for forming the second foam metal layer 22, a first alloy foil for forming the first foam metal layer 21 and a strength enhancement layer 1 in sequence, and bonding the second alloy foil, the first alloy foil and the strength enhancement layer to form an intermediate body.

The foam forming step comprises placing the intermediate body in a corrosive solution to remove one or more elements from the first alloy foil and the second alloy foil such that the first alloy foil and the second alloy foil respectively form the first foam metal layer 21 and the second foam metal layer 22, the second foam metal layer 22 treated with the corrosive solution having a porosity greater than that of the first foam metal layer 21.

In some embodiments, the corrosive solution includes at least one of a dilute hydrochloric acid solution, an ammonium sulfate solution, an electrolytic solution obtained by mixing H₂SO₄ and MnSO₄, an acetic acid solution, a phosphoric acid solution, and a sulfuric acid solution. Optionally, the corrosive solution has a concentration of 1 vol.% to 85 vol.%.

The first alloy foil, the second alloy foil, and the strength enhancement layer 1 are bonded by rolling. The roll bonding refers to a bonding method by which alloy plates are stacked and then integrated by means of strong plastic or thermoplastic deformation.

In some embodiments, in the preparation method for a current collector, the first alloy foil and the second alloy foil are prepared prior to the bonding step. The first alloy foil and the second alloy foil are both an alloy of copper and metal M. The metal M may be one of Mn, Zn, Al, Mg and Ni. The metal M is an element that can be removed by a corrosive solution. The content of the metal M in the first alloy foil is less than that of the metal M in the second alloy foil.

In some embodiments, the preparation method for a current collector further comprises a cleaning step prior to the bonding step. The cleaning step comprises removing impurities, such as oxide scale, on the first alloy foil and the second alloy foil.

In some embodiments, the bonding step comprises primary rolling and composite rolling. The primary rolling comprises rolling the cleaned alloy foil into an alloy plate with a thickness of 5-15 mm for later use. The composite rolling comprises stacking the alloy plate, the strength enhancement layer and the alloy plate in sequence, and rolling for several times to obtain a foil of 20-400 µm. The rolling may be cold rolling or hot rolling.

The following table shows experimental data of a battery current collector using the technical means of this embodiment and a battery current collector of a comparative example. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

The parameter and performance tests of the battery current collectors of the examples and the comparative examples are shown in the following table:

**Table 1**

| | Thickness of strength enhancement layer/µm | Porosity of second foam metal layer/% | Porosity of first foam metal layer/% | Thickness of first foam metal layer/µm | Thickness of second foam metal layer/µm | Elasticity modulus/Gpa |
|---|---|---|---|---|---|---|
| Comparative example 1 | 4.5 | 85 | 87 | 20 | 105 | 2.59 |
| Example 1 | 4.5 | 85 | 30 | 20 | 105 | 6.80 |
| Example 2 | 4.5 | 85 | 60 | 20 | 105 | 4.33 |
| Example 3 | 4.5 | 85 | 50 | 20 | 105 | 5.09 |

A calculation method for elasticity modulus (performed by a resistance strain gauge as a testing apparatus according to the Chinese standard GB/T 22315-2008) comprises:
1. measuring three cross-sectional dimensions of a test piece within the range of gauge length of the test piece, and taking the average of three cross-sectional areas as the cross-sectional area A of the test piece;
2. connecting a lead-out wire of the resistance strain gauge on the test piece by means of a full-bridge method;
3. turning on a power switch of a tester, and applying an initial load of 50 N;
4. correcting the sensitivity coefficient on the resistance strain gauge, and setting a connected full-bridge measurement channel on the strain gauge to 0;
5. applying load slowly and stepwise, ΔP = 100 N, for a total of 4 times, Pmax = 450 N, and recording corresponding strain readings of a longitudinal strain gauge and a transverse strain gauge once for each increase of load;
6. removing the load after the experiment; and
7. drawing a σ-ε diagram according to the records, and calculating the elasticity modulus E = Δσ/Δε, where σ represents the stress received by the test piece, which is determined by the load applied to the test piece, and ε represents the strain of the test piece, which is measured by the strain gauge. Elasticity modulus is a measure of the capability of the current collector to resist elastic deformation. The larger the elasticity modulus value, the smaller the elastic deformation will occur under the action of a certain stress, that is to say, the current collector is less likely to be deformed or damaged under stress.

The preparation methods of the comparative examples and the examples in Table 1 are shown below:

### Comparative example 1

In a first step, two alloys respectively having atomic percentages of 15% Cu-85% Mn and 13% Cu-87% Mn were obtained by means of vacuum smelting.

In a second step, alloy treatment,
impurities, such as oxide scale, in the alloys obtained in the first step were removed, specifically, the impurities, such as the oxide scale, were removed by means of mechanical polishing.

In a third step, primary rolling,
the alloys obtained in the second step were primarily rolled to obtain an alloy plate with a thickness of 22-117 um for later use, with the temperature during the primary rolling being 850°C.

In a fourth step, composite rolling,
the alloy plate obtained in the third step and a pure copper foil were stacked in a stacked manner of the second alloy plate/the first alloy plate/the copper foil/the first alloy plate/the second alloy plate, and then rolled to obtain a composite foil with a total thickness of 254.5 um, with the temperature during the first rolling procedure in the composite rolling being 850°C, and the temperature during each subsequent rolling procedure being the room temperature.

In a fifth step, dealloying,
the foil obtained in the fifth step was dealloyed to remove metal Mn by corrosion by means of placing the sample in an aqueous hydrochloric acid solution with a concentration of 5 wt% at the room temperature for 36 h, taking out the sample after the corrosion, and placing the sample in deionized water for ultrasonic cleaning for 4 h.

In a sixth step, drying,
the sample obtained in the fifth step was dried in a vacuum oven at 45°C to obtain a porous foam current collector.

### Example 1

In a first step, two alloys respectively having atomic percentages of 15% Cu-85% Mn and 70% Cu-30% Mn were obtained by means of vacuum smelting.

The subsequent treatment steps were the same as those in comparative example 1.

### Example 2

In a first step, two alloys respectively having atomic percentages of 15% Cu-85% Mn and 40% Cu-60% Mn were obtained by means of vacuum smelting.

The subsequent treatment steps were the same as those in comparative example 1.

### Example 3

In a first step, two alloys respectively having atomic percentages of 15% Cu-85% Mn and 50% Cu-50% Mn were obtained by means of vacuum smelting.

The subsequent treatment steps were the same as those in comparative example 1.

**Table 2**

| | Thickness of strength enhancement layer/µm | Porosity of second foam metal layer/% | Porosity of first foam metal layer/% | Thickness of first foam metal layer/µm | Thickness of second foam metal layer/µm | Elasticity modulus/Gpa |
|---|---|---|---|---|---|---|
| Comparative example 1 | 4.5 | 85 | 60 | 10 | 105 | 3.54 |
| Example 1 | 4.5 | 85 | 60 | 20 | 105 | 4.33 |
| Example 2 | 4.5 | 85 | 60 | 100 | 105 | 8.87 |
| Example 3 | 4.5 | 85 | 60 | 50 | 105 | 6.38 |

The preparation methods of the examples and the comparative example in Table 2 are shown below.

### Comparative example 1

In a first step, two alloys respectively having atomic percentages of 15% Cu-85% Mn and 40% Cu-60% Mn were obtained by means of vacuum smelting.

In a second step, alloy treatment,
impurities, such as oxide scale, in the alloys obtained in the first step were removed, specifically, the impurities, such as the oxide scale, were removed by means of mechanical polishing.

In a third step, primary rolling,
the alloys obtained in the second step were primarily rolled to obtain an alloy plate with a thickness of 11.2-116.7 um for later use.

In a fourth step, composite rolling,
the alloy plate obtained in the third step and a pure copper foil were stacked in a stacked manner of the second alloy plate/the first alloy plate/the copper foil/the first alloy plate/the second alloy plate, and then rolled to obtain a composite foil with a total thickness of 234.5 um, with the temperature during the first rolling procedure in the composite rolling being 850°C, and the temperature during each subsequent rolling procedure being the room temperature.

In a fifth step, dealloying,
the foil obtained in the fifth step was dealloyed to remove metal Mn by corrosion by means of placing the sample in an aqueous hydrochloric acid solution with a concentration of 5 wt% at the room temperature for 36 h, taking out the sample after the corrosion, and placing the sample in deionized water for ultrasonic cleaning for 4 h.

In a sixth step, drying,
the sample obtained in the fifth step was dried in a vacuum oven at 45°C to obtain a porous foam current collector.

The subsequent treatment steps were the same as those in comparative example 1.

### Example 1

In a first step, two alloys respectively having atomic percentages of 15% Cu-85% Mn and 40% Cu-60% Mn were obtained by means of vacuum smelting.

In a second step, alloy treatment,
impurities, such as oxide scale, in the alloys obtained in the first step were removed, specifically, the impurities, such as the oxide scale, were removed by means of mechanical polishing.

In a third step, primary rolling,
the alloys obtained in the second step were primarily rolled to obtain an alloy plate with a thickness of 22.2-116.7 um for later use.

In a fourth step, composite rolling,
the alloy plate obtained in the third step and a pure copper foil were stacked in a stacked manner of the second alloy plate/the first alloy plate/the copper foil/the first alloy plate/the second alloy plate, and then rolled to obtain a composite foil with a total thickness of 254.5 um, with the temperature during the first rolling procedure in the composite rolling being 850°C, and the temperature during each subsequent rolling procedure being the room temperature.

In a fifth step, dealloying,
the foil obtained in the fifth step was dealloyed to remove metal Mn by corrosion by means of placing the sample in an aqueous hydrochloric acid solution with a concentration of 5 wt% at the room temperature for 36 h, taking out the sample after the corrosion, and placing the sample in deionized water for ultrasonic cleaning for 4 h.

In a sixth step, drying,
the sample obtained in the fifth step was dried in a vacuum oven at 45°C to obtain a porous foam current collector.

The subsequent treatment steps were the same as those in comparative example 1.

### Example 2

In a first step, two alloys respectively having atomic percentages of 15% Cu-85% Mn and 40% Cu-60% Mn were obtained by means of vacuum smelting.

In a second step, alloy treatment,
impurities, such as oxide scale, in the alloys obtained in the first step were removed, specifically, the impurities, such as the oxide scale, were removed by means of mechanical polishing.

In a third step, primary rolling,
the alloys obtained in the second step were primarily rolled to obtain a gold plate with a thickness of 111-116.7 um for later use.

In a fourth step, composite rolling,
the alloy plate obtained in the third step and a pure copper foil were stacked in a stacked manner of the second alloy plate/the first alloy plate/the copper foil/the first alloy plate/the second alloy plate, and then rolled to obtain a composite foil with a total thickness of 414.5 um, with the temperature during the first rolling procedure in the composite rolling being 850°C, and the temperature during each subsequent rolling procedure being the room temperature.

In a fifth step, dealloying,
the foil obtained in the fifth step was dealloyed to remove metal Mn by corrosion by means of placing the sample in an aqueous hydrochloric acid solution with a concentration of 5 wt% at the room temperature for 36 h, taking out the sample after the corrosion, and placing the sample in deionized water for ultrasonic cleaning for 4 h.

In a sixth step, drying,
the sample obtained in the fifth step was dried in a vacuum oven at 45°C to obtain a porous foam current collector.

The subsequent treatment steps were the same as those in comparative example 1.

### Example 3

In a first step, two alloys respectively having atomic percentages of 15% Cu-85% Mn and 40% Cu-60% Mn were obtained by means of vacuum smelting.

In a second step, alloy treatment,
impurities, such as oxide scale, in the alloys obtained in the first step were removed, specifically, the impurities, such as the oxide scale, were removed by means of mechanical polishing.

In a third step, primary rolling,
the alloys obtained in the second step were primarily rolled to obtain an alloy plate with a thickness of 55.5-116.7 um for later use.

In a fourth step, composite rolling,
the alloy plate obtained in the third step and a pure copper foil were stacked in a stacked manner of the second alloy plate/the first alloy plate/the copper foil/the first alloy plate/the second alloy plate, and then rolled to obtain a composite foil with a total thickness of 314.5 um, with the temperature during the first rolling procedure in the composite rolling being 850°C, and the temperature during each subsequent rolling procedure being the room temperature.

In a fifth step, dealloying,
the foil obtained in the fifth step was dealloyed to remove metal Mn by corrosion by means of placing the sample in an aqueous hydrochloric acid solution with a concentration of 5 wt% at the room temperature for 36 h, taking out the sample after the corrosion, and placing the sample in deionized water for ultrasonic cleaning for 4 h.

In a sixth step, drying,
the sample obtained in the fifth step was dried in a vacuum oven at 45°C to obtain a porous foam current collector.

The subsequent treatment steps were the same as those in comparative example 1.

Fig. 4 shows a schematic structural diagram of a current collector of some embodiments of the present application. As shown in Fig. 4, the current collector comprises a strength enhancement layer 1 and a current collecting layer 2 stacked with the strength layer, the current collecting layers 2 being provided on two sides of the strength enhancement layer 1, and the two current collecting layers 2 including a first foam metal layer 21 close to the strength enhancement layer 1 and a second foam metal layer away from the strength enhancement layer 1. The first foam metal layer 21 has a porosity of 40-50%, and the first foam metal layer 21 has a thickness of 40 to 60 µm; and the second foam metal layer 22 has a porosity of 80-90%, and the second foam metal layer 22 has a thickness of 30 to 100 µm. The strength enhancement layer 1 has a thickness of 2 to 8 µm.

Fig. 5 shows a schematic structural diagram of a current collector of some embodiments of the present application. As shown in Fig. 4, the current collector comprises a strength enhancement layer 1 and a current collecting layer 2 stacked with the strength layer, the current collecting layers 2 being provided on two sides of the strength enhancement layer 1, and the two current collecting layers 2 including a first foam metal layer 21 close to the strength enhancement layer 1 and a second foam metal layer away from the strength enhancement layer 1. The first foam metal layer 21 has a porosity of 40-50%, and the first foam metal layer 21 has a thickness of 40 to 60 µm; and the second foam metal layer 22 has a porosity of 80-90%, and the second foam metal layer 22 has a thickness of 30 to 100 µm. The strength enhancement layer 1 has a thickness of 2 to 8 µm, the strength enhancement layer 1 is of a mesh structure, and optionally, the mesh structure has a pore diameter of 0.1 µm to 1 µm.

Fig. 6 shows a schematic structural diagram of a current collector of some embodiments of the present application. As shown in Fig. 4, the current collector comprises a strength enhancement layer 1 and a current collecting layer 2 stacked with the strength layer, the current collecting layers 2 being provided on two sides of the strength enhancement layer 1, and the two current collecting layers 2 including a first foam metal layer 21 close to the strength enhancement layer 1 and a second foam metal layer away from the strength enhancement layer 1. The first foam metal layer 21 has a porosity of 30-40%, and the first foam metal layer 21 has a thickness of 10 to 20 µm; and the second foam metal layer 22 has a porosity of 80-90%, and the second foam metal layer 22 has a thickness of 60 to 200 µm. The strength enhancement layer 1 has a thickness of 1 to 8 µm.

While the present application has been described with reference to the preferred embodiments, various modifications may be made, and equivalents may be provided to substitute for the components thereof without departing from the scope of the present application. In particular, the technical features mentioned in the embodiments can be combined in any manner, as long as there is no structural conflict. The present application is not limited to the specific embodiments disclosed herein, but includes all technical solutions that fall within the scope of the claims.

## Claims

1. A current collector, comprising:
a strength enhancement layer (1); and
a current collecting layer (2) comprising a first foam metal layer (21) that is stacked and bonded with the strength enhancement layer (1) and a second foam metal layer (22) that is provided on the side of the first foam metal layer (21) away from the strength enhancement layer (1) and is stacked with the first foam metal layer (21), the second foam metal layer (22) having a porosity greater than that of the first foam metal layer (21).

2. The current collector according to claim 1, wherein
the strength enhancement layer (1) is a sheet-like metal layer; or
the strength enhancement layer (1) is of a mesh structure.

3. The current collector according to claim 2, wherein the sheet-like metal layer is provided with a through hole.

4. The current collector according to any one of claims 1 to 3, wherein the current collecting layers (2) are respectively provided on two sides of the strength enhancement layer (1), and the strength enhancement layer (1) and the two current collecting layers (2) are provided side by side in a thickness direction of the current collector, the strength enhancement layer (1) being located between the two current collecting layers (2).

5. The current collector according to any one of claims 1 to 4, wherein
the first foam metal layer (21) has a porosity of 30% to 60%; and/or
the second foam metal layer (22) has a porosity of 80% to 95%.

6. The current collector according to any one of claims 1 to 5, wherein
the strength enhancement layer (1) has a thickness of 1-12 µm; and/or
the first foam metal layer (21) has a thickness of 20-100 µm; and/or
the second foam metal layer (22) has a thickness of 20-200 µm.

7. The current collector according to any one of claims 1 to 6, wherein
the current collecting layer (2) is made of one of copper, nickel, titanium, aluminum, silver, a nickel alloy, a titanium alloy, a silver alloy, and an aluminum alloy.

8. A preparation method for a current collector, the method comprising:
a bonding step comprising stacking a second alloy foil for forming a second foam metal layer (22), a first alloy foil for forming a first foam metal layer (21), and a strength enhancement layer (1) in sequence, and bonding the second alloy foil, the first alloy foil and the strength enhancement layer to form an intermediate body; and
a foam forming step comprising placing the intermediate body in a corrosive solution to remove one or more elements from the first alloy foil and the second alloy foil such that the first alloy foil and the second alloy foil respectively form the first foam metal layer (21) and the second foam metal layer (22), the second foam metal layer (22) treated with the corrosive solution having a porosity greater than that of the first foam metal layer (21).

9. The preparation method according to claim 8, wherein the corrosive solution includes at least one of a dilute hydrochloric acid solution, an ammonium sulfate solution, an electrolytic solution obtained by mixing H₂SO₄ and MnSO₄, an acetic acid solution, a phosphoric acid solution, and a sulfuric acid solution.

10. The preparation method according to claim 8 or 9, wherein the first alloy foil, the second alloy foil and the strength enhancement layer (1) are bonded by rolling.

11. A secondary battery, comprising a current collector according to any one of claims 1 to 7 or a current collector prepared by a preparation method according to any one of claims 8 to 10.

12. A battery module, comprising a secondary battery according to claim 11.

13. A battery pack, comprising a battery module according to claim 12.

14. A power consuming device, comprising at least one of a secondary battery according to claim 11, a battery module according to claim 12 and a battery pack according to claim 13.
